# EUROPÄISCHE PATENTSCHRIFT

(11) **EP 1 936 945 B1**
(45) Veröffentlichungstag und Bekanntmachung des Hinweises auf die Patenterteilung: **09.02.2011**
(21) Anmeldenummer: 06126912.2
(22) Anmeldetag: 21.12.2006
(51) Int. Cl.: H04N 1/04, G01J 3/00

(54) **Abtastvorrichtung mit elektronischer Abstandsregelung und ohne Abstandsmessfühler**
Scanning apparatus with electronic distance control and without distance sensor
Dispositif de balayage avec contrôle éléctronique de distance et sans detecteur de distance

(43) Veröffentlichungstag der Anmeldung: 25.06.2008
(73) Patentinhaber: X-Rite Europe GmbH, 8105 Regensdorf (CH)
(72) Erfinder: Ehbets, Peter, 8046, Zürich (CH); Kohlbrenner, Adrian, 8800, Thalwil (CH)
(74) Vertreter: Schwabe - Sandmair - Marx

(56) Entgegenhaltungen:
- EP-A- 1 694 049
- WO-A1-2006/045621
- JP-A- 10 160 573
- JP-A- 57 166 530
- JP-A- 2001 264 173
- US-A1- 5 592 294

## Beschreibung

Die Erfindung betrifft eine Abtastvorrichtung für die punktweise Ausmessung der Farbeigenschaften eines Messobjekts mittels eines Farbmesskopfs gemäss dem Oberbegriff des unabhängigen Anspruchs 1.

In der veröffentlichten internationalen Patentanmeldung WO 2006/045621 A1 ist ein automatisiertes Messsystem zur Qualitätskontrolle und zur Farbregelung einer Druckmaschine in allen Details beschrieben. Es umfasst im Wesentlichen einen Messtisch, auf dem ein auszumessender Druckbogen aufgelegt werden kann, und eine Messeinrichtung, die aus einem balkenförmigen Zeilenscanner und einem Einzel-Farbmesskopf besteht. Der Zeilenscanner und der Einzelmesskopf sind mittels einer rechnergesteuerten Antriebsvorrichtung über den Messtisch verfahrbar, so dass jeder Punkt des auszumessenden Druckbogens selektiv angefahren und ausgemessen werden kann. Aus den dabei gewonnenen Messwerten werden die notwendigen Qualitäts- und Regelparameter für den Druckprozess abgeleitet. Die Ausgabeparameter umfassen in der Regel Farbmesswerte CIE XYZ und abgeleitete farbmetrische Grössen (gemäss CIE Publikation 15 und ISO 13655) sowie Dichtemesswerte gemäss ISO 5. Vorteilhaft ist der Einzelmesskopf als Spektralmesskopf implementiert, so dass aus den gemessenen spektralen Werten des Reflexionsfaktors alle Ausgabeparameter nach bekannter Art berechnet werden können. Der Einzelmesskopf wird in der Regel zur Ausmessung von im Druckbogen enthaltenen Druckkontrollstreifen verwendet, während der Zeilenscanner zur Abtastung des übrigen gedruckten Bildinhalts eingesetzt wird.

Die Messfeldgrösse im Druckkontrollstreifen wird tendenziell immer kleiner, einerseits um Makulatur zu sparen, andererseits um mehr Messfelder im Druckkontrollstreifen anordnen zu können und mehr Druckwerke mit einem Streifen regeln zu können.

Das saubere Ausmessen kleiner Messfelder mit hoher Abtastgeschwindigkeit erfordert eine komplexere Ausgestaltung der Messoptik im Vergleich zum aktuellen Stand der Technik. Parameter wie Abstandsempfindlichkeit und Positioniergenauigkeit des Messkopfes müssen deutlich höhere Anforderungen erfüllen. Ausserdem muss die Homogenität der Messfelder berücksichtigt werden, wenn mit kleinen Messblenden gearbeitet wird.

Da frisch bedruckte Druckproben gemessen werden müssen, ist eine freischwebende Messgeometrie von Wichtigkeit. Die Auslegung des Messsystems muss eine Anpassung der unterschiedlichen Papierdicken sowie die Planaritätsschwankungen der Probenauflage berücksichtigen können.

Für hochpräzise Messungen ist es extrem wichtig, dass der Randabstand zwischen Beleuchtungs- und Messfleck des Farbmesskopfs auf dem Messobjekt so klein wie möglich gehalten wird. Die Grösse des Randabstand hängt in der üblicherweise verwendeten 45°/0°-Messgeometrie von der Summe aller auftretenden Abweichungen in z-Richtung (Höhenabweichungen) plus Justagefehlern ab und beinhaltet den maximalen Planaritätsfehler der Messunterlage über die gesamte Messfläche, die Positioniergenauigkeit des Sammelflecks gegenüber den Beleuchtungsflecken und die Abbildungsunschärfen im Bereich der Ränder von Beleuchtungsfleck und Sammelfleck.

Das Messsystem AxisControl der Firma Heidelberg verwendet einen kompakten spektralen Messkopf mit einem zwei-dimensionalen Antrieb über einer planaren Bogenauflagefläche. Der Messkopf kann nicht freischwebend messen. Der Abstand wird über eine mechanische Auflage des Messkopfs auf der Unterlage kontrolliert. Die Lage des Druckkontrollstreifens auf dem Bogen muss manuell mit einem Lichtzeiger bestimmt werden. Die Messtechnik ist nur für spektrale Messung ohne Polarisationsfilter ausgelegt und benötigt eine Messfeldgrösse von typischerweise 5 mm x 6 mm.

Das Messsystem Intellitrax der Firma X-rite Inc. kombiniert einen spektralen Farbmesskopf mit einem Trackingsensor, der eine automatische Spurfindung und Positionierung gegenüber dem Druckkontrollstreifen ermöglicht. Das optische Messsystem ist mit einem festen Arbeitsabstand zur Probenauflage ausgelegt und muss deshalb den ganzen Bereich verschiedener Papierdicken tolerieren. Bei Anwendung der genormten 45°/0°-Messgeometrie erfordern die Abstandstoleranzen einen entsprechend gross ausgelegten Randabstand zwischen beleuchteter und gesammelter Fläche im Messfeld. Für einen grossen Bereich von Papierdicken von 0 bis über 1 mm limitiert dieser Ansatz die minimale Messfleckgrösse und somit die Anwendung für das Erfassen kleinster Messfelder ohne Übersprechen.

Ein weiteres Messsystem ist im Dokument DE 195 30 185 C2 beschrieben. Die Abstandsproblematik wird bei diesem bekannten System durch Erzeugung eines Luftkissens zwischen Messkopfunterkante und Papieroberfläche gelöst, auf welchem der Messkopf schwebt. Durch das Luftkissen wird unabhängig von der Papierdicke ein konstanter Arbeitsabstand erreicht.

Durch die vorliegende Erfindung soll nun eine Abtastvorrichtung der gattungsgemässen Art dahingehend verbessert werden, dass sie für die berührungslose, hochpräzise Messung auch von kleinsten Messfeldern geeignet ist.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: eine vereinfachte Gesamtansicht eines Ausführungsbeispiels der erfindungsgemässen Abtastvorrichtung,
- Fig. 2: einen teilweisen Längsschnitt parallel zur Koordinatenebene x-y durch den Messwagen der Abtastvorrichtung,
- Fig. 3: einen teilweisen Querschnitt parallel zur Koordinatenebene x-z durch den Messwagen der Abtastvorrichtung,
- Fig. 4: eine schematische Darstellung des grundsätzlichen Aufbaus des Farbmesskopfs der Abtastvorrichtung,
- Fig. 5: ein Prinzipblockschema der Mess- und Steuerelektronik der Abtastvorrichtung,
- Fig. 6: Messkurven zur Erläuterung der Ermittlung des korrekten Messabstands des Farbmesskopfs über einem Messpunkt,
- Fig. 7: ein Blockschema der Ermittlung des korrekten Messabstands des Farbmesskopfs und
- Fig. 8: ein Blockschema einer aktiven Höhen- bzw. Abstandsregelung für den Farbmesskopf.

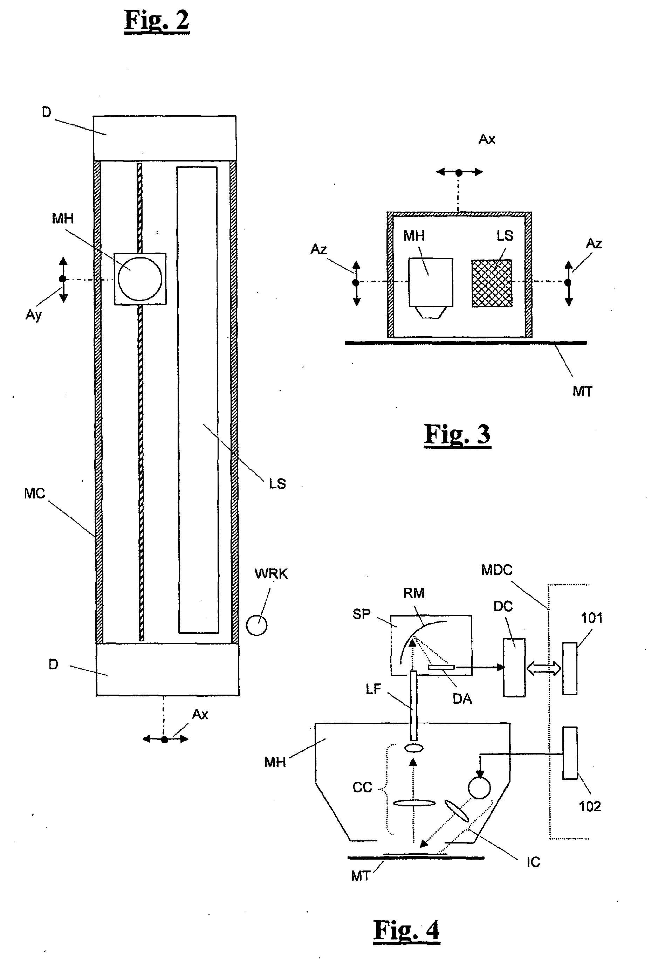

Die erfindungsgemässe Abtastvorrichtung entspricht in ihrem generellen Aufbau den üblichen Messapparaturen, wie sie z.B. in der grafischen Industrie typischerweise zur punktweisen fotoelektrischen Ausmessung von einem Druckprozess entnommenen Druckbögen verwendet werden. Die Abtastvorrichtung umfasst einen Unterbau in Form eines Messtischs MT mit üblicherweise geneigter rechteckiger Oberfläche, auf der das Messobjekt S - der auszumessende Druckbogen - positioniert werden kann. Der Messtisch bildet also eine Auflagefläche für das Messobjekt. Der Druckbogen S enthält typischerweise einige (hier beispielsweise vier) grafische Darstellungen P1-P4 und einen (oder mehrere) Farbmessstreifen CMS. Zur Positionierung des Messobjekts S sind am Messtisch MT nicht dargestellte Anschläge vorgesehen. Die Fixierung des Messobjekts S auf dem Messtisch MT erfolgt vorzugsweise auf elektrostatischem Wege oder mittels bekannter Saugmechanismen. Auf dem Messtisch MT ist ein länglicher Messwagen MC angeordnet, auf bzw. in dem sich eine Messeinrichtung befindet, die einen balkenförmigen Zeilenscanner LS und einen vorzugsweise spektral ausgelegten Einzel-Farbmesskopf MH umfasst (Figuren 2 und 3). Der Messwagen MC erstreckt sich über die Tiefe des Messtischs MT in Koordinatenrichtung y und ist motorisch über dessen Breite in Koordinatenrichtung x linear hin und her beweglich, wobei entsprechende Antriebs- und Steuereinrichtungen am Messwagen MC und am bzw. unter dem Messtisch MT vorgesehen sind. Die Antriebseinrichtung ist in der Zeichnung nur symbolisch durch das Bezugszeichen D angedeutet, die Beweglichkeit des Messwagens MC in x-Richtung durch den Pfeil Ax. Innerhalb des Messwagens MC sind der Zeilenscanner LS und der Farbmesskopf MH unabhängig von einander mittels nicht dargestellter konventioneller Antriebseinrichtungen in Richtung der Koordinatenachse z relativ zur Messtischoberfläche heb- und senkbar, was in Fig. 3 durch die Pfeile Az symbolisiert ist. Der Farbmesskopf MH ist ausserdem noch in Richtung der Koordinatenachse y verfahrbar. Diese Bewegungsmöglichkeit ist in der Figur 2 durch den Pfeil Ay symbolisiert. In Verbindung mit der Bewegung des Messwagens MC in x-Richtung und der Verfahrbarkeit in y- und z-Richtung kann der Farbmesskopf MH über jedem beliebigen Bildelement des Messobjekts positioniert werden.

Der Zeilenscanner LS kann jeweils eine komplette Bildpunktzeile des Messobjekts S ausmessen und dient typischerweise zur Erfassung des Bildinhalts des Messobjekts. Der Einzel-Farbmesskopf MH wird zur hochpräzisen Ausmessung von ausgewählten Bildpunkten des Messobjekts und insbesondere der Messfelder von Farbmessstreifen (Druckkontrollstreifen) eingesetzt. Der Zeilenscanner ist in WO 2006/045621 A1 in allen Einzelheiten beschrieben und nicht Gegenstand der vorliegenden Erfindung.

Auf dem Messtisch MT befindet sich parallel zum Messwagen MC ein Weissreferenzstreifen WR. Ferner ist auf dem Messtisch in Randnähe, aber noch im Erfassungsbereich des Farbmesskopfs MH eine langzeitstabile Weissreferenzkachel WRK angeordnet. Diese beiden Weissreferenzen dienen der Kalibrierung der Messeinrichtung, worauf weiter unten noch näher eingegangen wird.

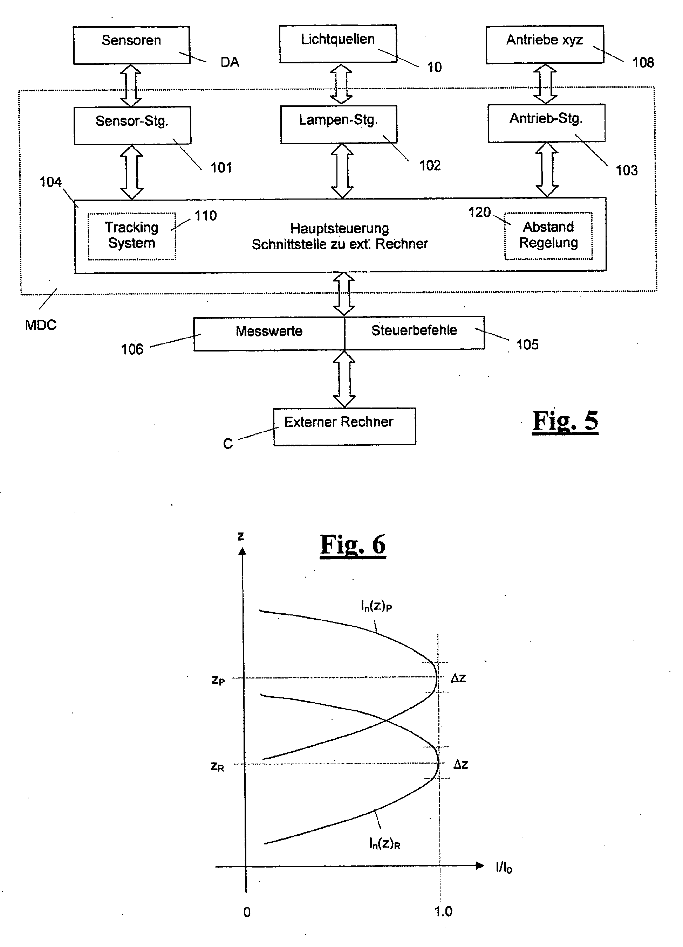

Die Abtastvorrichtung umfasst ferner noch eine Verarbeitungseinrichtung in Form eines externen Rechners C mit einer Tastatur K und einem Farbmonitor M. Der Rechner C arbeitet mit einer Mess- und Antriebssteuerung MDC (Fig. 5) am Messtisch MT bzw. im Messwagen MC zusammen und verarbeitet die vom im Messwagen MC befindlichen Zeilenscanner LC und Farbmesskopf MH erzeugten und ihm über die Mess- und Antriebssteuerung MDC zugeführten Messsignale, wobei er unter anderem auch die Bildinformation des abgetasteten Messobjekt S auf dem Monitor M darstellen kann. Der Rechner C kann über die Mess- und Antriebssteuerung MDC ferner auch die Bewegungen des Messwagens MC und des darin befindlichen Zeilenscanners LS und Farbmesskopfs MH in die drei Koordinatenrichtungen x, y und z veranlassen und steuern.

Die Fig. 4 zeigt schematisch den grundsätzlichen Aufbau des Einzel-Farbmesskopfs MH. Er umfasst einen Beleuchtungskanal IC, einen Sammel- oder Messkanal CC, einen Lichtleiter (optische Faser oder Lichtleiterstab) LF und einen wellenlängenselektiven lichtelektrischen Wandler, der hier als ein Spektrometer SP mit einem konkaven Beugungsgitter RM und einem Detektor-Array DA (z.B. ein Dioden-ZeilenDetektor) und einer Ausleseelektronik DC für das Detektor-Array DA ausgebildet ist. Der Beleuchtungskanal IC beleuchtet das auf dem Messtisch MT befindliche Messobjekt in einem Beleuchtungsfleck unter einem (genormten) mittleren Einfallswinkel von 45° (bezogen auf die Normale auf das Messobjekt am Messort), der Sammelkanal CC fängt das von einem innerhalb des Beleuchtungsflecks liegenden Messfleck auf dem Messobjekt ausgehende Messlicht unter einem (genormten) Auffangwinkelbereich von 0° +/- 5-10° (bezogen auf die Normale auf das Messobjekt am Messort) auf und koppelt es über eine Einkoppeloptik in den Lichtleiter LF ein. Der Lichtleiter LF leitet das Messlicht in den Eintrittsspalt des Spektrometers SP. Das Messlicht wird im Spektrometer SP durch das konkave Beugungsgitter RM spektral aufgespalten. Die einzelnen Spektralanteile des Messlichts gelangen örtlich aufgelöst auf das Detektor-Array DA und werden dort in entsprechende elektrische Signale umgewandelt. Die Ausleseelektronik DC liest das Detektor-Array DA aus und leitet die spektralen Messsignale an die Sensorsteuerung 101 in der Mess- und Antriebssteuerung MDC weiter. Die nicht bezeichnete Lichtquelle im Beleuchtungskanal IC wird von der Lampensteuerung 102 in der Mess- und Antriebssteuerung MDC (Fig. 5) angesteuert.

Für minimale Messzeiten und maximale Abtast- (Scan-)Geschwindigkeit ist der Einsatz eines Spektrometers von Vorteil, welches eine simultane Messung der spektralen Verteilung ermöglicht. Das Spektrometer kann, wie dargestellt, als Gitter-Spektrometer mit Diodenzeilen-Detektor ausgebildet sein, welches die spektrale Verteilung in einer Beugungsordnung des Gitters mit einem Zeilen- oder Matrixdetektor ermöglicht. Alternativ kann das Spektrometer auch mit einem Detektor-Array mit einer Anzahl von schmalbandigen Bandpassfiltern ausgestattet sein, welche nebeneinander vor dem Detektor-Array angeordnet sind. Das Beugungsgitter entfällt dann natürlich.

In der Fig. 5 ist die Mess- und Antriebssteuerung MDC der Abtastvorrichtung in Form eines groben Blockschemas dargestellt. Sie umfasst eine Sensorsteuerung 101, eine Lampensteuerung 102 und eine Antriebssteuerung 103 sowie eine Hauptsteuerung 104, die mit den anderen drei Steuerungen zusammenarbeitet und gleichzeitig auch die Verbindung zum externen Rechner C herstellt. Die Sensorsteuerung 101 liest die Messwerte aus dem Zeilenscanner LS und Farbmesskopf MH aus, die Lampensteuerung 102 steuert die Lichtquellen von Zeilenscanner LS und Farbmesskopf MH, und die Antriebssteuerung 103 steuert Antriebsmotoren 108 für die Bewegung des Messwagens MC und des darin befindlichen Farbmesskopfs MH in die drei Bewegungsrichtungen x, y, und z. Die Hauptsteuerung 104 koordiniert und kontrolliert die drei übrigen Steuerungen auf einer übergeordneten Ebene und stellt gleichzeitig auch die Verbindung zum externen Rechner C her. Die Hauptsteuerung 104 nimmt vom externen Rechner C Steuerbefehle 105 entgegen und sendet dem externen Rechner die vom Zeilenscanner LS und dem Farbmesskopf MH erzeugten (digital aufbereiteten) Messwerte 106. Die Mess- und Antriebssteuerung MDC ist funktionell im Prinzip gleich wie bei den kommerziell erhältlichen Abtastgeräten dieser Art, wobei sich die für die Ansteuerung der fotoelektrischen Wandler und Lichtquellen von Zeilenscanner LS und Farbmesskopf MH erforderlichen spezifischen Funktionen unmittelbar aus den Datenblättern der Hersteller dieser Elemente ergeben. Der Fachmann bedarf daher für die Implementierung der Mess- und Antriebssteuerung MDC keiner näheren Erläuterung.

In der Hauptsteuerung 104 sind ferner noch ein Tracking System (Spurlagekontrolle für den Farbmesskopf MH) und eine aktive Abstandsregelung für die Höheneinstellung des Farbmesskopfs enthalten und in Fig. 5 durch die beiden Blöcke 110 und 120 symbolisiert. Darauf wird weiter unten noch näher eingegangen.

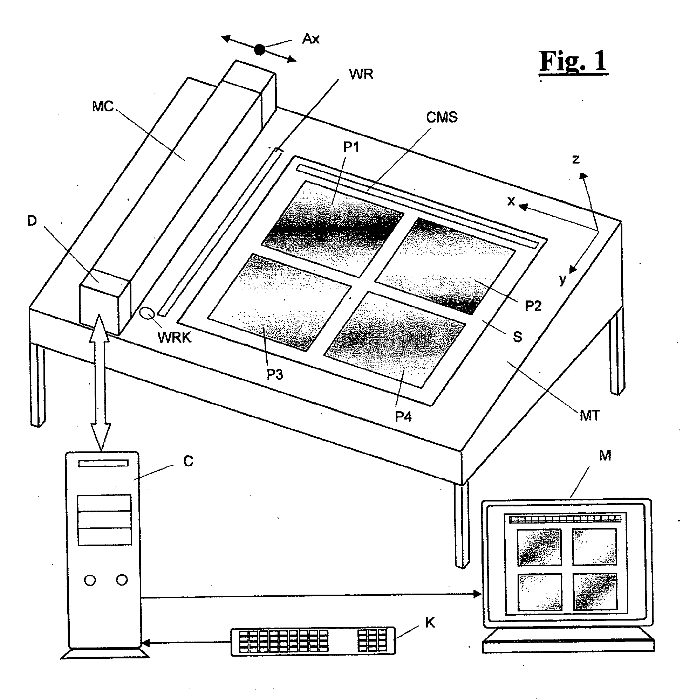

Die in den Figuren 1-5 dargestellte Abtastvorrichtung entspricht (mit Ausnahme der Abstandsregelung 120) soweit dem bekannten Stand der Technik, wie er z.B. in der eingangs erwähnten WO 2006/045621 A1 detailliert beschrieben ist. Der mechanische Aufbau und die Realisierung der motorischen Verfahrbarkeit von Messwagen MC und Zeilenscanner bzw. Farbmesskopf sind in der US-A 6,028,682 detailliert beschrieben, so dass der Fachmann diesbezüglich keiner weiteren Erläuterung bedarf. Es versteht sich, dass der Messwagen MC auch parallel zur Koordinatenrichtung x angeordnet sein kann, wobei dann alle anderen Ausrichtungen und Bewegungsrichtungen sinngemäss ebenfalls um 90° gedreht wären.

Die vorliegende Erfindung befasst sich primär mit der Abstandsregelung des Einzel-Farbmesskopfs MH und den damit zusammenhängenden Aspekten. Die Erfindung umfasst daher auch Abtastvorrichtungen, die entweder nur mit einem Einzel-Farbmesskopf MH ausgestattet sind oder anstelle eines Zeilenscanners eine andere Bildabtasteinrichtung aufweisen. Die Erfindung umfasst ferner auch einfachere Abtastvorrichtungen, bei denen der Farbmesskopf nur eindimensional verfahrbar ist. Solche Abtastvorrichtungen erfordern dann aber einen präzisisen mechanischen Anschlag für die Druckbogenkanten oder eine genaue manuelle Positionierung des Druckbogens durch den Drucker. Ferner befasst sich die Erfindung auch mit einigen speziellen Aspekten der Abtastvorrichtung, welche für hochpräzise und vor allem schnelle Messungen von Bedeutung sind. Dazu gehören u.a. das genannte Spurlage-Regelsystem und eine spezielle Auslegung der Weisskalibrierung.

Die erfindungsgemässe Abtastvorrichtung muss für ihre Funktion eine absolute Weissmessung ausführen. Bei den bekannten Abtastvorrichtungen dieser Art wird für die absolute Weissmessung eine an einem Punkt auf dem Messtisch angeordnete kalibrierte Weissreferenz regelmässig angefahren und gemessen. Bei der erfindungsgemässen Abtastvorrichtung werden zwei unterschiedliche Weissreferenzen eingesetzt, und zwar die konventionelle, langzeitstabile Weissreferenzkachel WRK, welche vor dem Einbau extern absolut kalibriert und an einem möglichst vor Verschmutzung geschützten Ort in der Abtastvorrichtung angeordnet ist (Fig. 2), und der Weissreferenzstreifen WR, welcher an einer Seite des Messtischs MT über die ganze Seitenlänge angebracht ist (Fig. 1). Für diesen Streifen muss nicht langzeitstabiles Material verwendet werden. Die Referenzwerte für das absolute Weiss über die gesamte Länge des Weissreferenzstreifens WR können durch eine Transfermessung mit dem Farbmesskopf MH von der Weissreferenzkachel WRK abgeleitet werden.

Bei der Transfermessung führt der Farbmesskopf zuerst eine Weisskalibration auf der Weissreferenzkachel WRK aus. Dies entspricht einer Messung im Sollabstand. Den spektralen Messwerten werden die (im System abgespeicherten) spektralen Kalibrationswerte der Weissreferenzkachel WRK zugeordnet. Danach misst der Farbmesskopf im Sollabstand den Weissreferenzstreifen WR an einer Vielzahl von Positionen über die gesamte Länge verteilt aus. Aus diesen Messwerten wird durch Interpolation an jeder beliebigen Position ein entsprechendes Weissspektrum berechnet, welches vom Farbmesskopf bei nachfolgenden Weissabgleichen an dieser Position verwendet wird.

Ein alternativer Ablauf ist wie folgt möglich: Beim Einrichten eines Druckauftrags zeigt der Drucker bzw. Anwender dem Farbmesskopf auf einem ersten Druckbogen die Position des Druckkontrollstreifens. Dies kann mittels eines optischen Positionszeigers, zum Beispiel eines Laserpointers, erfolgen, welcher im Messkopfgehäuse integriert ist und die Messunterlage an einer bekannten Position relativ zur Messposition beleuchtet. Bei diesem Ablauf führt der Farbmesskopf zuerst eine absolute Weissmessung auf der Weissreferenzkachel WRK aus und fährt dann an die entsprechende Position über dem Weissreferenzstreifen WR. An dieser Position führt dann der Farbmesskopf eine Messung aus und legt einen lokalen Referenzwert fest. Diese Position entspricht der Ruheposition des Farbmesskopfs für den ganzen Druckauf trag. Bei jeder Bogenmessung wird an dieser Position vor und/oder nach dem Messlauf ein Weissabgleich ausgeführt.

Wenn die Transfermessung durchgeführt ist, können weitere Weissmessungen bei folgenden Messläufen am Weissreferenzstreifen WR unter Berücksichtigung der Transfermessung durchgeführt werden, was wesentlich schneller geht, weil der Messkopf dabei nicht an die (normalerweise abseits des Abtastbereichs angeordnete) Weissreferenzkachel WRK verfahren werden muss. Die Transfermessung muss in regelmässigen zeitlichen Abständen wiederholt werden, um den Einfluss von Verschmutzung zu kompensieren.

Der korrekte Messabstand in z-Richtung zum Weissreferenzstreifen WR und auch zur Weissreferenzkachel WRK wird gemäss einem wesentlichen Aspekt der Erfindung durch eine Messreihe in verschiedenen Höhen und Bestimmung des Sollabstands nach einem Kriterium bestimmt. Als Kriterium kann z.B. die Mitte desjenigen Höhenbereichs (z-Bereichs) gewählt werden, bei dem die Variation aller in diesem Bereich gemessenen Messwerte minimal ist. Diese Bestimmung des korrekten Messabstands (Soll-Messabstands) ist weiter unten anhand der Fig. 6 näher beschrieben. Die Ausmessung des Weissreferenzstreifens WR kann aber auch im Sollabstand des Messkopfs über dem Druckbogen erfolgen und das Messergebnis rechnerisch korrigiert werden. Darauf wird weiter unten noch näher eingegangen.

Die erfindungsgemässe Abtastvorrichtung ist vorzugsweise ähnlich wie beim eingangs erwähnten bekannten System Intellitrax mit einem Spurlage-Regelungssystem (Tracking System) für den Farbmesskopf MH ausgestattet. Das Spurlage-Regelungssystem ist programmtechnisch in der Hauptsteuerung 104 der Mess- und Antriebssteuerung MDC implementiert und in Fig. 5 durch den Block 110 symbolisiert. Es kann zur Lokalisierung des Druckkontrollstreifens CMS auf dem Druckbogen S z.B. die Messsignale des Zeilenscanners LS auswerten. Vorzugsweise ist aber für das Spurlage-Regelungssystem am Farbmesskopf MH mit diesem mitbeweglich ein separater kurzer Miniaturzeilenscanner angebracht, dessen Signale ebenfalls von der Mess- und Antriebssteuerung MDC ausgewertet werden. Das Spurlage-Regelungssystem ermöglicht während eines Messlaufs des Farbmesskopfs eine aktive Kontrolle der lateralen Messposition gegenüber der Längsrichtung des Druckkontrollstreifens auf dem Druckbogen.

Beim Einrichten eines neuen Druckauftrags muss der Drucker den Farbmesskopf in der Abtastvorrichtung einmalig so positionieren, dass sich der Druckkontrollstreifen auf dem Bogen im Fangbereich des Spurlage-Regelungssystems befindet. Der Farbmesskopf befindet sich dann an dieser Warteposition mit der Messöffnung über dem Weissreferenzstreifen WR, um kontinuierliche Weissmessungen auszuführen. Bei einem anschliessenden Messlauf muss der Drucker den Bogen nur mit dem Druckkontrollstreifen innerhalb des Fangbereichs des Spurlage-Regelungssystems auflegen. Der Farbmesskopf kann dann automatisch mit minimaler Fahrzeit die Messung ausführen. Die Zeit für eine Weissmessung der punktförmigen Weissreferenzkachel WRK entfällt. Ein automatischer Weissabgleich auf dem Streifen wird vor und nach der abtastenden Messreihe ausgeführt. Anhand der zwei Weissmessungen kann eine zeitliche Pegeldrift des Messsystems detektiert und auch durch Interpolation zwischen den beiden Messwerten kompensiert werden.

Wie schon eingangs erwähnt, ist es für hochpräzise Messungen extrem wichtig, dass der Randabstand zwischen Beleuchtungs- und Messfleck des Farbmesskopfs MH auf dem Messobjekt S so klein wie möglich gehalten wird. Die Grösse des Randabstand hängt in der verwendeten 45°/0°-Messgeometrie von der Summe aller auftretenden Abweichungen in z-Richtung (Höhenabweichungen) plus Justagefehlern ab und beinhaltet den maximalen Planaritätsfehler der Messunterlage (Auflagefläche bzw. Messtisch MT) über die gesamte Messfläche, die Positioniergenauigkeit des Sammelflecks gegenüber den Beleuchtungsflecken und die Abbildungsunschärfen im Bereich der Ränder von Beleuchtungsfleck und Sammelfleck.

Aus Kostengründen ist es üblich, für die Messung grossflächiger Druckformate die Planarität der Auflagenfläche (Messtisch MT) nicht zu hoch zu spezifizieren. Da dies den Randabstand zwischen Beleuchtungsfleck und Sammelfleck aber entsprechend vergrössert, ist die Abtastvorrichtung gemäss einem Hauptaspekt der Erfindung mit einer elektronischen Abstandsregelung in der Mess- und Antriebssteuerung MDC ausgerüstet. Die Abstandsregelung misst mittels eines z.B. am Gehäuse des Farbmesskopfs befestigten Abstandssensors die Abstandsschwankungen zur Unterlage und löst eine entsprechende Abstandskorrektur mit dem Antrieb in z-Richtung aus, so dass sich der Farbmesskopf MH an jedem Punkt im gleichen (Soll-)Abstand über der Unterlage (dem Messtisch) befindet.

Die aktive Abstandsregelung ist gemäß der Erfindung ohne laufende Abstandsmessung mittels eines Abstandssensors implementiert . Zu diesem Zweck wird während der Fertigung vor der Inbetriebnahme der Abtastvorrichtung die Planarität der Auflagefläche (Messtisch MT) in Bezug zur mechanischen Halterung des Farbmesskopfs MH an einer Vielzahl von Messpunkten über der gesamten Messtischfläche gemessen. Die Messpunkte können z.B. in einem regelmässigen Messraster gewählt werden. Die Abstände der Messpunkte im Messraster werden entsprechend der lokalen Steigung der Abstandsvariation und der geforderten Genauigkeit gewählt. Die Koordinaten (x,y) der Messpunkte sowie die ermittelten Abstände (absoluten Höhen) des Farbmesskopfs bei korrektem Soll-Messabstand über den Messpunkten werden als Planaritätsmesswerte in der Mess- und Antriebssteuerung MDC gespeichert. Sie bilden gewissermassen ein Höhen- bzw. Tiefenprofil der Oberfläche des Messtischs gegenüber einer Referenzebene, die durch die beiden Bewegungsachsen x und y des Farbmesskopfs MH gegeben ist. Mittels numerischer Interpolation zwischen den Messpunkten des Messrasters kann für jede Position des Messtischs bzw. seiner Oberfläche eine entsprechende Soll-Höhe des Farbmesskopfs berechnet und dann für die Abstandsregelung verwendet werden.

Die Abstände (Höhen) können während der Fertigung der Abtastvorrichtung mittels eines Abstandssensors, welcher vorübergehend an der Halterung des Farbmesskopfs MH befestigt wird, gemessen werden. Gemäss einem weiteren Aspekt der Erfindung erfolgt aber diese Höhen- bzw. Abstandsmessung mit dem Farbmesskopf MH selbst. Diese Methode bietet den Vorteil, dass die Planaritätsmessung im Feld zu einem späteren Zeitpunkt im Bedarfsfall ohne zusätzliche Hilfsmittel wiederholt werden kann.

Für diese im Folgenden anhand der Fig. 6 erläuterte Ausbildung der Abstandsregelung wird an jedem Messpunkt der vom Farbmesskopf MH erzeugte Signalpegel (z.B. die aus den einzelnen Spektralwerten berechnete Helligkeit I im Messpunkt) für verschiedene, jeweils in kleinen Stufen veränderte Höheneinstellungen z gemessen. Die Höhenverstellung erfolgt mittels der Antriebsteuerung 108 in z-Richtung. Die Messreihe der Signalpegel I wird an jeder Position gegenüber dem jeweiligen Maximalwert I₀ normalisiert. Die Kurven der normalisierten Signalpegel in Funktion der z-Position gleichen sich an jedem Messpunkt. In der Fig. 6 sind zwei solche normalisierte Kurven Iₙ(z)_{R} und Iₙ(z)_{P} für zwei Messpunkte R bzw. P dargestellt. Die dem Soll-Messabstand entsprechende absolute Soll-Höhe des Farbmesskopfs MH wird nun an jedem Messpunkt des Messrasters nach einem gleichen Kriterium auf eindeutige Weise bestimmt. Eine Möglichkeit dazu besteht darin, die Soll-Höhe als den Mitten-z-Wert eines bezüglich seiner Breite festgelegten z-Bereichs Δz festzulegen, wobei die z-Lage des z-Bereichs Δz so ermittelt wird, dass die Variation der innerhalb von ihm liegenden (normalisierten) Signalpegel minimal ist. In der Fig. 6 sind die so ermittelten Mitten-z-Werte für die beiden Messpunkte R und P mit z_{R} bzw. z_{P} bezeichnet. Die entsprechenden Mitten-z-Werte an jedem Messpunkt ergeben dann die absoluten Soll-Höhen des Farbmesskopfs über den Messpunkten (auf der Messtischoberfläche) und werden wie beschrieben zusammen mit den x,y-Koordinaten der Messpunkte des Messrasters für die spätere Verwendung in der aktiven z-Einstellung des Farbmesskopfs MH auf den korrekten Soll-Messabstand abgespeichert.

Mit der vorstehend beschriebenen aktiven Höhen- bzw. Abstandsregelung werden nur Planaritätsfehler der Messtischoberfläche kompensiert, nicht aber die Einflüsse verschiedener Dicken der Messobjekte (Papierdicken). Für letzteres ist die Abstandsregelung noch mit einer Papierdickenkorrekturfunktion ausgestattet.

Beim Einrichten des Druckauftrags ermittelt das Abstandsregelsystem auf dem ersten auszumessenden Druckbogen die verwendete Papierdicke. Zu diesem Zweck fährt der Farbmesskopf automatisch an eine (beliebige) Position auf dem Druckbogen. Dann wird die Soll-Höhe des Farbmesskopfs in z-Richtung bestimmt, bei welcher sich der Farbmesskopf im korrekten Soll-Messabstand über der Oberfläche des Druckbogens befindet. Dies kann beispielsweise dadurch erfolgen, dass mit dem Farbmesskopf wie vorstehend beschrieben Messungen in verschiedenen Höheneinstellungen gemacht werden und anhand der dabei erzeugten Messreihe die dem korrekten Soll-Messabstand entsprechende Höhe (z-Lage) des Farbmesskopfs ermittelt wird. Die z-Differenz zwischen dieser Höhe und der (bei der Planaritätsmessung ermittelten) Soll-Höhe für den darunterliegenden Punkt auf der Messtischoberfläche ergibt die Papierdicke.

Zu Beginn des Messvorgangs von nachfolgenden Druckbögen befindet sich der Farbmesskopf in Warteposition auf der zum korrekten Soll-Messabstand gehörenden Soll-Höhe über dem Weissreferenzstreifen WR. In der Beschleunigungsphase der Abtastbewegung zwischen Weissreferenzstreifen WR und Druckbogen S korrigiert das Abstandsregelsystem die Höhenposition des Farbmesskopfs (unter gleichzeitiger Planaritätskompensation) für die Papierdicke so, dass die Messungen, welche über dem Druckbogen liegen, mit dem richtigen Soll-Messabstand ausgeführt werden können. Die Einstellung bzw. Nachführung des Farbmesskopfs MH auf die für den korrekten Soll-Messabstand erforderliche Höhe kann alternativ wie bei der Planaritätsmessung auch mittels eines konventionellen Abstandssensors und von diesem angesteuerten Regelsystems erfolgen. Dies erfordert jedoch einen zusätzlichen apparativen Aufwand.

Gemäss einer besonders zweckmässigen alternativen Vorgehensweise kann sich der Farbmesskopf zu Beginn des Messlaufs auch auf einer Höhe in Warteposition befindet, welche dem korrekten Soll-Messabstand am Anfangsrand des Druckbogens entspricht. Die Warteposition liegt dabei in x-Richtung vor dem Weissreferenzstreifen WR. Wenn der Farbmesskopf über den Weissreferenzstreifen fährt, erfolgt dann die Weissmessung (meistens) in "falscher" Höhe. Damit eine quantitativ richtige Weissmessung dennoch möglich ist, muss die Messung, die auf der falschen Höhe erfolgt ist, in ein Messergebnis entsprechend der richtigen Höhe über dem Weissreferenzstreifen WR umgerechnet werden. Pro spektralem Messwert wird dazu je ein Korrekturfaktor benötigt. Die Korrekturfaktoren können aus der bei der Fokussierungsmessung auf dem Weissreferenzstreifen erfolgenden (spektralen) Höhen-Intensitätsfunktion (Fig. 6) bestimmt werden. Dieses Messen auf der falschen Höhe über dem Weissreferenzstreifen ist besonders dann zweckmässig, wenn am Farbmesskopf der schon erwähnte Miniaturzeilenscanner als Spurlage-Sensor angeordnet ist. Dieser befindet sich in der Praxis in x-Richtung in einem Abstand von ca. 10 cm vom Messfleck des Farbmesskopfs, d.h. die Messung des Spurlage-Sensors eilt dem Messfleck des Farbmesskopfs voraus. Würde der Weissreferenzstreifen mit der korrekten Soll-Höhe des Farbmesskopfs gemessen, so würde dies bedeuten, dass der vorauseilende Spurlage-Sensor u.U. auf einer falschen Höhe beginnt den Druckbogen abzutasten. Dies würde ein korrektes "Einfädeln" auf dem Farbmessstreifen u.U. erschweren oder verunmöglichen.

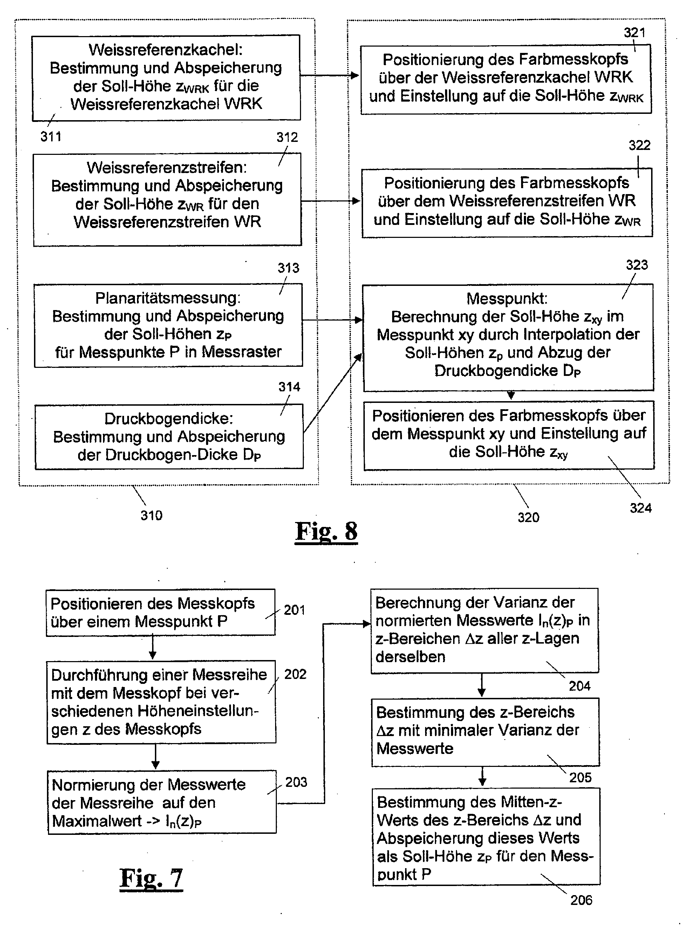

In den Figuren 7 und 8 sind die einzelnen Schritte der vorstehend erläuterten aktiven Höhen- bzw. Abstandsregelung nochmals übersichtlich in Form eines Blockschemas zusammengestellt.

Gemäss Fig. 7 wird für die Ermittlung der Sollhöhe des Farbmesskopfs über einem Messpunkt P der Farbmesskopf MH über dem Messpunkt positioniert (Block 201).

Dann wird der Farbmesskopf in unterschiedliche Höhen z verstellt und bei jeder Höhe z eine Messung durchgeführt (Block 202). Die dabei gewonnene Messreihe wird auf ihren Maximalwert normiert (Block 203). Dann wird die Varianz der normierten Messwerte für z-Bereiche Δz fester Breite für alle möglichen z-Lagen dieser Bereiche berechnet (Block 204). Es wird dann derjenige z-Bereich ermittelt, für den die Varianz minimal ist (Block 205). Und schliesslich wird der Mitten-z-Wert dieses z-Bereichs mit minimaler Messwert-Varianz bestimmt und als Sollhöhe z_{P} für den betreffenden Messpunkt P abgespeichert (Block 206).

Die Funktionsweise der aktiven Höhen- bzw. Abstandsregelung geht aus Fig. 8 hervor. Sie umfasst zwei Gruppen von Funktionen, die jeweils durch Kästen 310 bzw. 320 zusammengefasst sind. Im Kasten 310 befinden sich die vorbereitenden Funktionsschritte, im Kasten 320 die eigentlichen Regelschritte während der verschiedenen Messabläufe.

Im Block 311 wird die Sollhöhe Z_{WRK} des Farbmesskopfs über der Weissreferenzkachel WRK bestimmt und abgespeichert, wobei gemäss Fig. 7 verfahren wird.

In gleicher Weise wird in Block 312 die Sollhöhe Z_{WR} des Weissreferenzstreifens WR bestimmt und abgespeichert. Erforderlichenfalls können auch mehrere Sollhöhen an verschiedenen Positionen des Weissreferenzstreifens bestimmt werden.

Im Block 313 erfolgt die Planaritätsmessung der Messtischoberfläche, wobei die Sollhöhen zp des Farbmesskopfs über einem Raster von Messpunkten P auf der Messtischoberfläche ermittelt und abgespeichert werden. Auch dabei wird nach dem in Fig. 7 dargestellten Verfahren vorgegangen.

Im Block 314 schliesslich wird die Dicke Dp des auszumessenden Druckbogens ermittelt und abgespeichert. Dies erfolgt ebenfalls analog Fig. 7.

Nach diesen vorbereitenden Messungen bzw. Schritten ist die Abtastvorrichtung für eigentliche Messungen bereit.

Für die Ausmessung der Weissreferenzkachel WRK wird der Farbmesskopf über dieser positioniert und auf die gespeicherte Sollhöhe z_{WRK} eingestellt (Block 321). Dann wird die Weissmessung durchgeführt.

Für die Ausmessung eines Punkts des Weissreferenzstreifens WR wird der Farbmesskopf über diesem Punkt positioniert und auf die für diesen Punkt gespeicherte Sollhöhe z_{wR} eingestellt (Block 322). Dann wird die Weissmessung durchgeführt.

Für die Ausmessung eines Messpunkts des Druckbogens mit den Koordinaten xy wird die für diesen Punkt erforderliche Sollhöhe Z_{xy} des Farbmesskopfs durch Interpolation der abgespeicherten Sollhöhen z_{P} der Rasterpunkte P und unter Berücksichtigung (Abzug) der Dicke D_{P} des Druckbogens berechnet (Block 323). Dann wird der Farbmesskopf an den Messpunkt xy verfahren und dabei gleichzeitig auf die berechnete Sollhöhe z_{xy} eingestellt (Block 324). Anschliessend erfolgt die Ausmessung des Messpunkts xy.

Die in den Figuren 7 und 8 schematisch dargestellten Funktionsblöcke sind programmtechnisch realisiert und in der Mess- und Antriebssteuerung MDC der Abtastvorrichtung implementiert und dort durch den Block 120 symbolisiert (Fig. 5). Es ist aber auch möglich, diese Funktionen im externen Rechner C zu implementieren und dann die Mess- und Antriebssteuerung MDC der Abtastvorrichtung entsprechend anzusteuern.

## Patentansprüche

1. Abtastvorrichtung für die punktweise Ausmessung der Farbeigenschaften eines Messobjektes (S) mittels eines Farbmesskopfs (MH), mit einer Auflagefläche (MT) für das Messobjekt und einer Antriebseinrichtung (D) zur Bewegung des Farbmesskopfs (MH) über die Auflagefläche (MT) in wenigstens einer Dimension derselben und zur Höhenverstellung des Farbmesskopfs (MH) in Richtung senkrecht zur Auflagefläche sowie mit einer die Antriebseinrichtung (D) ansteuernden und mit dem Farbmesskopf (MH) zusammenarbeitenden Mess- und Antriebssteuerung (MDC),
**dadurch gekennzeichnet, dass**
sie eine elektronische Abstandsregelung (120) aufweist, welche für jeden Messpunkt den Abstand des Farbmesskopfs (MH) über dem Messort in Richtung senkrecht zur Auflagefläche (MT) auf einen Soll-Messabstand einstellt, und
dass die Abstandsregelung (120) eine Planaritätsmessung der Auflagefläche (MT) durchführt und die dabei ermittelten Planaritätsmesswerte (zₚ) abspeichert und die Abstandseinstellung des Farbmesskopfs (MH) unter Berücksichtigung der gespeicherten Planaritätsmesswerte vornimmt.

2. Abtastvorrichtung nach Anspruch 1, **dadurch gekennzeichnet, dass** die Abstandsregelung (120) für die Planaritätsmessung in einem Raster von über die Auflagefläche (MT) verteilten Messpunkten (P) die Soll-Höhen (zₚ) des Farbmesskopfs (MH) über diesen Messpunkten (P) ermittelt und als Planaritätsmesswerte (zₚ) abspeichert.

3. Abtastvorrichtung nach einem der Ansprüche 1- 2, **dadurch gekennzeichnet, dass** die Abstandsregelung (120) eine Messung der Dicke (Dₚ) des Messobjekts (S) durchführt und speichert und die Abstandseinstellung des Farbmesskopfs (MH) unter Berücksichtigung der gespeicherten Dicke des Messobjekts vornimmt.

4. Abtastvorrichtung nach Anspruch 3, **dadurch gekennzeichnet, dass** die Abstandsregelung (120) für die Messung der Dicke (Dₚ) des Messobjekts (S) die Soll-Höhe des Farbmesskopfs (MH) über einem Messpunkt auf dem Messobjekt und die Soll-Höhe des Farbmesskopfs (MH) über einem unter diesem Messpunkt auf der Auflagefläche (MT) liegenden Punkt bestimmt und die Differenz dieser beiden Soll-Höhen als Dicke (Dₚ) des Messobjekts speichert.

5. Abtastvorrichtung nach einem der Ansprüche 1-4, **dadurch gekennzeichnet, dass** die Abstandsregelung (120) die Soll-Höhe des Farbmesskopfs (MH) an einem Messpunkt aus mit dem Farbmesskopf (MH) bei verschiedenen Höheneinstellungen desselben am Messpunkt gemessenen Messwerten bestimmt.

6. Abtastvorrichtung nach Anspruch 5, **dadurch gekennzeichnet, dass** die Abstandsregelung (120) als Soll-Höhe des Farbmesskopfs (MH) an einem Messpunkt diejenige Höheneinstellung des Farbmesskopfs bestimmt, in deren Umgebung sich die mit dem Farbmesskopf gemessenen Messwerte am wenigsten ändern.

7. Abtastvorrichtung nach einem der Ansprüche 1-6, **dadurch gekennzeichnet, dass** sie mit einem Spurlage-Regelungssystem (110) für den Farbmesskopf (MH) ausgestattet ist, welches die Lage einer abzutastenden Spur, insbesondere eines Druckkontrollstreifens, auf dem Messobjekt (S) erkennt und den Farbmesskopf (MH) entlang dieser Spur führt.

8. Abtastvorrichtung nach einem der Ansprüche 1-7, **dadurch gekennzeichnet, dass** sie mit einer kalibrierten, langzeitstabilen Weissreferenzkachel (WRK) und einem auf der Auflagefläche (MT) angeordneten Weissreferenstreifen (WR) ausgestattet ist, und dass die Mess- und Antriebssteuerung (MDC) dazu ausgebildet ist, die Weisskalibrierung der Abtastvorrichtung aufgrund von Weissmessungen am Weissreferenzstreifen (WR) durchzuführen, wobei diese Weissmessungen durch zuvor erfolgte Transfermessungen an der Weissreferenzkachel (WRK) kalibriert werden.

9. Abtastvorrichtung nach einem der Ansprüche 1 - 7, **dadurch gekennzeichnet, dass** sie mit einem auf der Auflagefläche (MT) angeordneten Weissreferenzstreifen (WR) ausgestattet ist, und dass die Mess- und Antriebssteuerung (MDC) dazu ausgebildet ist, mit dem Farbmesskopf (MH) in vom korrekten Soll-Messabstand abweichendem Abstand gemessene Weissmesswerte rechnerisch so zu korrigieren, dass sie in korrektem Soll-Messabstand gemessenen Weissmesswerten entsprechen.

## Claims

1. A scanning apparatus for the pointwise measurement of the colour properties of an article to be measured (S) by means of a colour measuring head (MH), with a support face (MT) for the article to be measured and a drive device (D) for moving the colour measuring head (MH) over the support face (MT) in at least one dimension thereof and for the vertical adjustment of the colour measuring head (MH) in a direction at a right angle to the support face and with a measurement and drive control (MDC) actuating the drive device (D) and co-operating with the colour measuring head (MH),
**characterized in that** it has an electronic distance control (120) which for each measurement point sets the distance of the colour measuring head (MH) above the measurement location in a direction at a right angle to the support face (MT) to a nominal measurement distance, and
the distance control (120) carries out a planarity measurement of the support face (MT) and stores the planarity measurement values (zₚ) determined during this and carries out the distance setting of the colour measuring head (MH) whilst taking into consideration the stored planarity measurement values.

2. A scanning apparatus according to claim 1, **characterized in that** the distance control (120) for the planarity measurement in a grid of measurement points (P) distributed over the support face (MT) determines the nominal heights (zₚ) of the colour measuring head (MH) above these measurement points (P) and stores them as planarity measurement values (zₚ).

3. A scanning apparatus according to one of claims 1 to 2, **characterized in that** the distance control (120) carries out a measurement of the thickness (Dₚ) of the article to be measured (S) and stores it, and carries out the distance setting of the colour measuring head (MH) whilst taking into consideration the stored thickness of the article to be measured.

4. A scanning apparatus according to claim 3, **characterized in that** the distance control (120) for measuring the thickness (Dₚ) of the article to be measured (S) determines the nominal height of the colour measuring head (MH) above a measurement point on the article to be measured and the nominal height of the colour measuring head (MH) above a point situated below this measurement point on the support face (MT) and stores the difference of these two nominal heights as the thickness (Dₚ) of the article to be measured.

5. A scanning apparatus according to any one of claims 1 to 4, **characterized in that** the distance control (120) determines the nominal height of the colour measuring head (MH) at a measurement point from measurement values measured at the measurement point with the colour measuring head (MH) at various height settings of the latter.

6. A scanning apparatus according to claim 5, **characterized in that** the distance control (120) determines that height setting of the colour measuring head (MH), in the vicinity of which the measurement values measured with the colour measuring head vary the least, as a nominal height of the colour measuring head at a measurement point.

7. A scanning apparatus according to any one of claims 1 to 6, **characterized in that** it is provided with a tracking position regulating system (110) for the colour measuring head (MH), which tracking position regulating system (110) recognizes the position of a track to be scanned, in particular a print control strip, on the article to be measured (S) and guides the colour measuring head (MH) along this track.

8. A scanning apparatus according to any one of claims 1 to 7, **characterized in that** it is provided with a calibrated white reference tile (WRK) stable over a long period of time and a white reference strip (WR) arranged on the support face (MT), and the measurement and drive control (MDC) is designed in order to carry out the white calibration of the scanning apparatus on the basis of white measurements on the white reference strip (WR), wherein these white measurements are calibrated by transfer measurements previously carried out on the white reference tile (WRK).

9. A scanning apparatus according to any one of claims 1 to 7, **characterized in that** it is provided with a white reference strip (WR) arranged on the support face (MT), and the measurement and drive control (MDC) is designed in order to correct by calculation white measurement values measured by the colour measuring head (MH) at a distance differing from the correct nominal measurement distance, in such a way that they correspond to white measurement values measured at the correct nominal measurement distance.

## Revendications

1. Dispositif de balayage pour la mesure ponctuelle des caractéristiques de couleur d'un objet à mesurer (S) à l'aide d'une tête de mesure colorimétrique (MH), avec une surface d'appui (MT) pour l'objet à mesurer et un mécanisme d'entraînement (D) pour le mouvement de la tête de mesure colorimétrique (MH) sur la surface d'appui (MT) dans au moins une dimension de celle-ci et pour le réglage de la hauteur de la tête de mesure colorimétrique (MH) dans la direction perpendiculaire à la surface d'appui ainsi qu'avec une commande de mesure et d'entraînement (MDC) commandant le mécanisme d'entraînement (D) et collaborant avec la tête de mesure colorimétrique (MH),
**caractérisé en ce qu'**il présente une régulation d'écartement électronique (120) qui règle pour chaque point de mesure l'écartement de la tête de mesure colorimétrique (MH) au-dessus du lieu de mesure dans la direction perpendiculaire à la surface d'appui (MT) à une valeur de consigne d'écartement de mesure, et
**en ce que** la régulation d'écartement (120) effectue une mesure de planéité de la surface d'appui (MT) et mémorise les valeurs de planéité (zₚ) ainsi déterminées et effectue le réglage d'écartement de la tête de mesure colorimétrique (MH) en tenant compte des valeurs de mesure de planéité mémorisées.

2. Dispositif de balayage suivant la revendication 1, **caractérisé en ce que** la régulation d'écartement (120) pour la mesure de planéité détermine dans une grille de points de mesure (P) répartis sur la surface d'appui (MT) les hauteurs de consigne (zₚ) de la tête de mesure colorimétrique (MH) au-dessus de ces points de mesure (P) et les mémorise comme valeurs de mesure de planéité (zₚ).

3. Dispositif de balayage suivant l'une des revendications 1-2, **caractérisé en ce que** la régulation d'écartement (120) effectue une mesure de l'épaisseur (Dₚ) de l'objet à mesurer (S) et la mémorise et effectue le réglage d'écartement de la tête de mesure colorimétrique (MH) en tenant compte de l'épaisseur mémorisée de l'objet à mesurer.

4. Dispositif de balayage suivant la revendication 3, **caractérisé en ce que** la régulation d'écartement (120) pour la mesure de l'épaisseur (Dₚ) de l'objet à mesurer (S) détermine la hauteur de consigne de la tête de mesure colorimétrique (MH) au-dessus d'un point de mesure sur l'objet à mesurer et la hauteur de consigne de la tête de mesure colorimétrique (MH) au-dessus d'un point situé en dessous de ce point de mesure sur la surface d'appui (MT) et mémorise la différence de ces deux hauteurs de consigne comme épaisseur (Dₚ) de l'objet à mesurer.

5. Dispositif de balayage suivant l'une des revendications 1-4, **caractérisé en ce que** la régulation d'écartement (120) détermine la hauteur de consigne de la tête de mesure colorimétrique (MH) en un point de mesure à partir de valeurs mesurées avec la tête de mesure colorimétrique (MH) au point de mesure pour différents réglages de hauteur de celle-ci.

6. Dispositif de balayage suivant la revendication 5, **caractérisé en ce que** la régulation d'écartement (120) détermine comme hauteur de consigne de la tête de mesure colorimétrique (MH) en un point de mesure le réglage de la hauteur de la tête de mesure colorimétrique à proximité de laquelle les valeurs mesurées avec la tête de mesure colorimétrique varient le moins.

7. Dispositif de balayage suivant l'une des revendications 1-6, **caractérisé en ce qu'**il est équipé d'un système de régulation de la position d'une piste (110) pour la tête de mesure colorimétrique (MH), lequel détecte la position d'une piste à détecter, en particulier d'une gamme de contrôle, sur l'objet à mesurer (S) et guide la tête de mesure colorimétrique (MH) le long de cette piste.

8. Dispositif de balayage suivant l'une des revendications 1-7, **caractérisé en ce qu'**il est équipé d'un bloc blanc (WRK) calibré, stable à long terme et d'une bande de référence de blanc (WR) disposée sur la surface d'appui (MT) et **en ce que** la commande de mesure et d'entraînement (MDC) est conçue pour effectuer le calibrage du blanc du dispositif de balayage sur base de mesures de blanc sur la bande de référence de blanc (WR), ces mesures de blanc étant calibrés à l'aide de mesures de transfert effectuées préalablement sur le bloc blanc (WRK).

9. Dispositif de balayage suivant l'une des revendications 1-7, **caractérisé en ce qu'**il est équipé d'une bande de référence de blanc (WR) située sur la surface d'appui (MT) et **en ce que** la commande de mesure et d'entraînement (MDC) est conçue pour corriger par calcul des valeurs de blanc mesurées avec la tête de mesure colorimétrique (MH) à une distance différant de l'écartement de mesure de consigne correct de telle façon qu'elles correspondent aux valeurs de blanc mesurées à l'écartement de mesure de consigne correct.
